(19) Europäisches Patentamt / European Patent Office / Office européen des brevets

(11) **EP 2 174 269 B1**

(12) **FASCICULE DE BREVET EUROPEEN**

(45) Date de publication et mention de la délivrance du brevet:
**08.02.2012 Bulletin 2012/06**

(51) Int Cl.:
***G06K 19/07*** *(2006.01)*   ***G06K 19/073*** *(2006.01)*
***G06K 19/077*** *(2006.01)*

(21) Numéro de dépôt: **08829522.5**

(86) Numéro de dépôt international:
**PCT/FR2008/001030**

(22) Date de dépôt: **15.07.2008**

(87) Numéro de publication internationale:
**WO 2009/030824 (12.03.2009 Gazette 2009/11)**

(54) **DOCUMENT SECURISE A PUCE SANS CONTACT AVEC PROTECTION DES DONNEES CONTRE DES LECTURES NON AUTORISEES**

GESICHERTES DOKUMENT MIT KONTAKTLOSEM CHIP UND SCHUTZ VON DATEN GEGEN UNAUTORISIERTEN ZUGRIFF

SECURED DOCUMENT WITH A CONTACTLESS CHIP WITH PROTECTION OF DATA AGAINST UNAUTHORISED ACCESS

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **26.07.2007 FR 0705486**

(43) Date de publication de la demande:
**14.04.2010 Bulletin 2010/15**

(73) Titulaire: **Smart Packaging Solutions (SPS)**
**13106 Rousset (FR)**

(72) Inventeurs:
• **ARTIGUE, Olivier**
  **F-13530 Trets (FR)**
• **SICOT, Cécile**
  **F-13790 Rousset (FR)**

(74) Mandataire: **Scheer, Luc**
**Global Inventions**
**38, Allée Valériane- Domaine de la Tour**
**83700 Saint-Raphael (FR)**

(56) Documents cités:
WO-A-2006/005396    FR-A- 2 863 083
FR-A- 2 888 367    FR-A- 2 888 653

## Description

La présente invention concerne un document sécurisé à puce sans contact avec masquage des données contre des lectures non autorisées.

De plus en plus de documents sécurisés, par exemple de type documents d'identité (passeport, carte d'identité, etc.), comportent un circuit électronique à lecture sans contact. Le circuit électronique, encore appelé transpondeur, est formé d'un module électronique, comportant une puce, et il est connecté à une antenne. Ce type de dispositif permet par exemple de stocker sous forme numérique des données personnelles d'état civil et des données biométriques et/ou administratives. Lorsque le document sécurisé doit être contrôlé par exemple pour en vérifier la validité, les données stockées sont lues à distance par un système récepteur approprié, encore appelé lecteur, au moyen d'un couplage électromagnétique entre le circuit électronique du document sécurisé et le lecteur. L'utilisation des technologies sans contact apporte des avantages significatifs en terme de durée de vie et d'ergonomie.

Cependant, il est important d'assurer au propriétaire que les données de son document d'identité ne peuvent pas être lues à son insu. En effet, la technologie sans contact sera d'autant mieux acceptée que l'autorisation de lecture des données stockées dans le document reste sous le contrôle du porteur du document.

Le problème du masquage des données contre une lecture effectuée à l'insu du porteur du document a déjà été abordé dans le WO 2005/066890. Ce document ne concerne que le cas de figure dans lequel la puce du document est reliée à une antenne de taille relativement grande, diposée sur la même feuille que la puce, et apte à entrer directement en communication radiofréquence avec un lecteur distant. La solution préconisée par ce document antérieur consiste à disposer en regard de l'antenne, un élément de masquage passif capable de perturber le couplage électromagnétique entre le transpondeur et l'antenne du lecteur, lorsque le document est fermé.

Par conséquent, ce document fait nécessairement appel à un élément de masquage passif, qui représente un coût de fabrication supplémentaire, et qui implique pour sa réalisation une ou plusieurs étapes de fabrication, ce qui augmente le coût de la technologie et par conséquent le coût du document d'identité final.

En outre, ce document ne permet pas de répondre au cas de figure nouveau qui est apparu, dans lequel le transpondeur du document est réalisé sur une pastille rapportée et pourvue d'une antenne de petite taille, comme décrit dans la demande de brevet FR 05 01378 de la même demanderesse. Dans ce cas, le transpondeur du document ne communique pas directement au moyen de sa petite antenne avec un lecteur distant, mais communique par mutuelle inductance avec une antenne d'amplification plus grande située elle aussi sur le document, qui relaie et amplifie la liaison radiofréquence avec le lecteur distant.

On connaît également un document WO 2005/045754 qui décrit un passeport pourvu d'un transpondeur présentant une antenne de grande taille disposée à cheval sur deux pages du passeport, de sorte qu'en position fermée du passeport, le champ électromagnétique capté par l'antenne du transpondeur soit nul et ne permette pas d'alimenter la puce du transpondeur.

Ce document ne permet pas de profiter de la technologie de transpondeur sous forme d'une pastille rapportée à intégrer au passeport, telle que décrite dans la demande FR 05 01378 précitée. En outre, l'antenne du transpondeur étant de grande taille et étant directement connectée à la puce du transpondeur, en cas de rupture de l'antenne, qui est notamment susceptible de se produire au niveau du pliage de l'antenne, il faut remplacer l'intégralité du passeport ce qui représente un coût important.

Une autre approche est encore proposée dans l'état antérieur de la technique par le document FR-A-2 888 367, décrivant un document à dispositif électronique sans contact comportant une antenne distincte de l'antenne du transpondeur de telle sorte qu'en position fermée du document, le flux électromagnétique capté par l'antenne est réduit, mais ce document ne propose pas de solution pour amplifier le flux électromagnétique en position ouverte du document.

L'amplification du signal à l'aide d'une antenne distincte de celle du transpondeur est décrite dans le FR-A-2 888 653, mais aucune solution n'y est proposée pour atténuer le flux électromagnétique traversant le document sécurisé lorsque celui-ci n'est pas utilisé.

Un autre but de l'invention est de proposer une nouvelle structure de passeport électronique particulièrement simple et économique à fabriquer, tout en conservant l'efficacité du masquage des données contre une lecture non autorisée.

A cet effet, l'invention a pour objet un document sécurisé présentant la forme d'un livret composé d'au moins une feuille repliable autour d'un axe de pliage délimitant une première partie et une seconde partie du document, le document portant un transpondeur comportant une puce électronique pourvue d'une mémoire pour le stockage de données et une antenne de transpondeur, caractérisé en ce qu'il comporte en outre une antenne d'amplification pliable, distincte de l'antenne du transpondeur, et disposée sur le document de manière qu'en position ouverte de celui-ci, elle amplifie le flux électromagnétique capté par l'antenne du transpondeur de façon à permettre la communication du document avec un lecteur distant, et qu'en position fermée du document, elle réduise le flux électromagnétique capté par l'antenne du transpondeur en dessous d'un seuil minimal permettant la communication de la puce électronique avec un lecteur distant.

Ainsi, en position ouverte du livret, l'antenne d'amplification du document présente une surface de captation du flux électromagnétique du lecteur, encore appelée surface effective de l'antenne, qui soit suffisante pour assurer la communication entre la puce électronique et le lecteur distant, par l'intermédiaire de l'antenne du transpondeur et de l'antenne d'amplification.

Au contraire, en position fermée du livret, l'antenne d'amplification présente une surface effective insuffisante pour assurer cette communication.

En effet, selon l'invention, le pliage du document pour l'amener en position fermée entraine un pliage de l'antenne d'amplification du document, ce qui perturbe le comportement électromagnétique de l'ensemble du document au point d'empêcher toute communication avec un lecteur distant. Ainsi, en pliant le document, il est possible de réduire à une valeur quasi nulle la surface effective de l'antenne d'amplification assurant la communication avec un lecteur distant, et par conséquent de fortement réduire le flux capté par l'antenne d'amplification lorsque le livret est en position fermée. De ce fait, le courant induit par mutuelle inductance dans l'antenne du transpondeur n'est plus suffisant pour alimenter le fonctionnement de la puce du transpondeur. Il en résulte que les données stockées dans la puce du document sont protégées contre une lecture à l'insu du propriétaire du document.

En variante, l'invention prévoit que l'antenne d'amplification comporte, en plus des spires assurant l'amplification du flux capté par l'antenne du transpondeur, au moins un moyen concentrateur de flux permettant de concentrer le flux capté issu du lecteur, vers l'antenne du transpondeur. De cette manière, la communication avec un lecteur distant est encore améliorée lorsque le document est en position ouverte.

De préférence, l'antenne d'amplification est de taille supérieure à l'antenne du transpondeur et elle est disposée à cheval sur une feuille du document, de part et d'autre de l'axe de pliage de celui-ci, de sorte qu'en position fermée du document, l'antenne d'amplification inhibe la communication radiofréquence entre l'antenne du transpondeur et l'antenne du lecteur, alors qu'en position ouverte du document, l'antenne d'amplification favorise cette communication.

L'antenne d'amplification pliable peut être disposée à différents endroits sur le document. Ainsi, selon une variante de réalisation, le document a la forme d'un livret et l'antenne pliable est placée à cheval sur les feuilles de couverture du document sécurisé. Selon une autre variante, elle est disposée sur deux pages internes contigues du document. L'antenne du transpondeur peut être disposée sur la même feuille du document que l'antenne d'amplification, de manière à assurer une possibilité de couplage par mutuelle inductance.

Selon une autre variante, l'antenne d'amplification du document et le transpondeur électronique pourvu de son antenne sont supportés respectivement par une desdites couvertures du livret et un des feuillets mobiles du livret. Mais il est également possible d'adopter une disposition dans laquelle l'antenne d'amplification du document et le transpondeur sont supportés respectivement par un des feuillets du livret et par une desdites couvertures du livret.

Selon une variante encore plus élaborée de l'invention, il est encore possible d'augmenter la sécurité du document, au moyen d'un élément de masquage du flux électromagnétique, disposé sur l'une des feuilles du document de telle manière qu'en position ouverte du document il ne masque pas le flux electromagnétique destiné à l'antenne du transpondeur, et qu'en position fermée du document, il se superpose à l'antenne du transpondeur, de façon à empêcher ou perturber la communication entre le transpondeur et l'antenne d'amplification, et par voie de conséquence avec le lecteur distant.

Dans cette dernière variante, l'élément de masquage peut avantageusement être constitué par la piste élargie d'une des spires de l'antenne d'amplification ou tout autre élément massif tel qu'une capacité, cette piste élargie étant disposée de manière qu'en position fermée du document, elle se trouve en face de l'antenne du transpondeur de façon à bloquer toute communication électromagnétique de celui-ci avec un lecteur externe, même à forte puissance de lecture.

D'autres caractéristiques et avantages de l'invention apparaîtront à la lecture de la description détaillée des dessins annexés dans lesquels :

- les figures 1A/1B illustrent un passeport électronique pourvu de moyens empêchant la lecture intempestive des données, selon une structure conforme à l'état antérieur de la technique;
- la figure 2 illustre un autre passeport pourvu de moyens pour empêcher la lecture non autorisée des données, selon une autre structure connue dans l'état antérieur de la technique ;
- les figures 3A et 3B représentent des vues en perspective d'un passeport électronique selon l'invention, en position ouverte et en position fermée;
- les figures 4A et 4B représentent une première variante du passeport des figures 3A et 3B ;

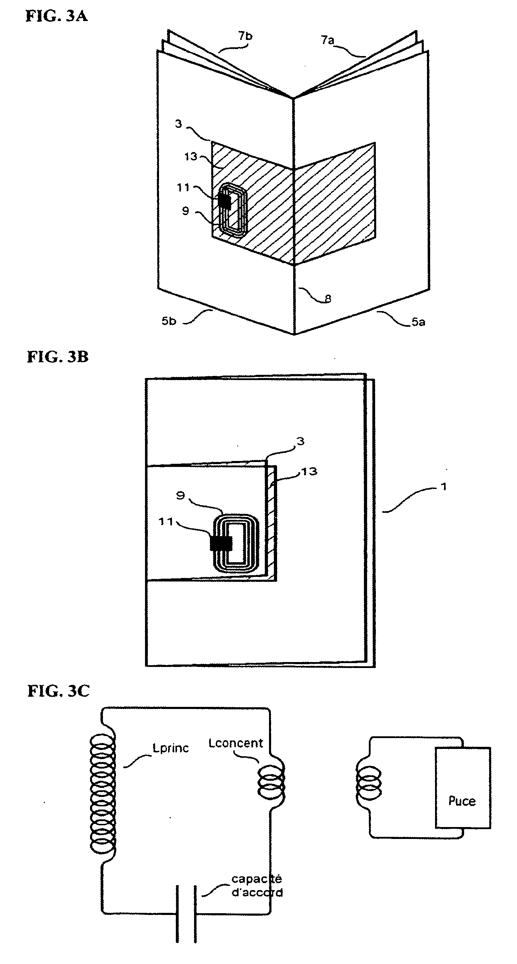

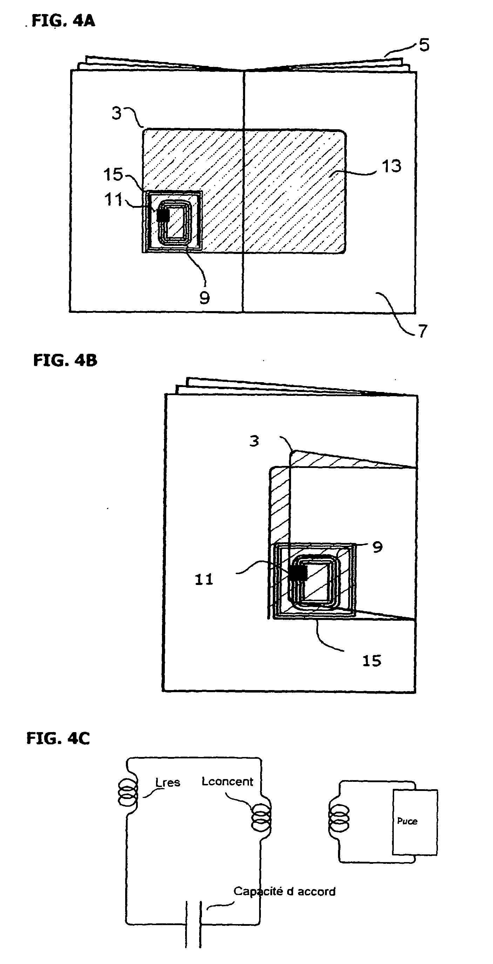

- les figures 3C et 4C représentent les schémas électriques équivalents des passeports des figures 3A, 3B, 4A, 4B, respectivement en position ouverte et en position fermée ;

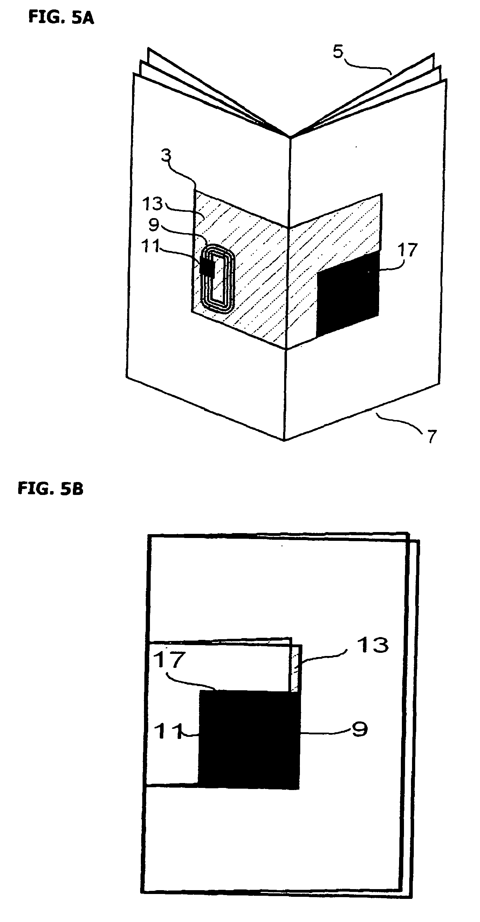

- les figures 5A et 5B représentent une seconde variante du passeport des figures 3A et 3B, dans laquelle le passeport est en outre pourvu d'un élément de masquage passif;

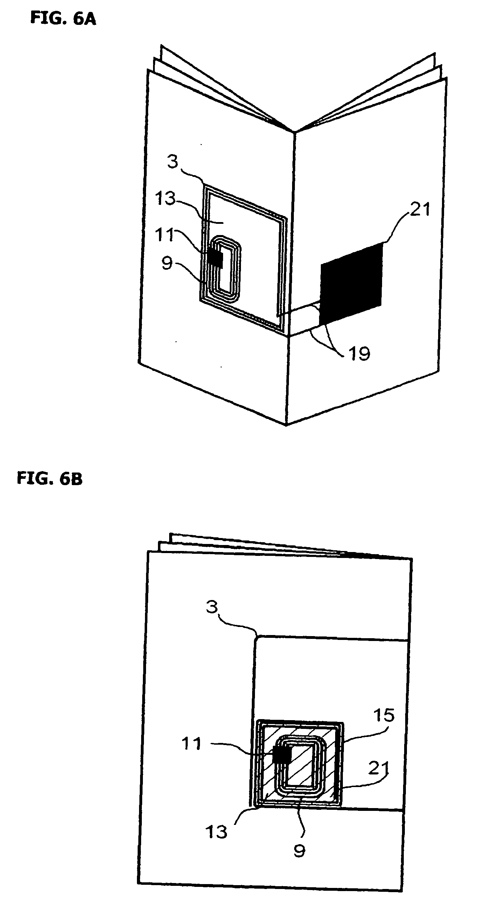

- les figures 6A et 6B représentent une troisième variante du passeport des figures 3A et 4B, dans laquelle le passeport est en outre pourvu d'un élément de masquage passif;

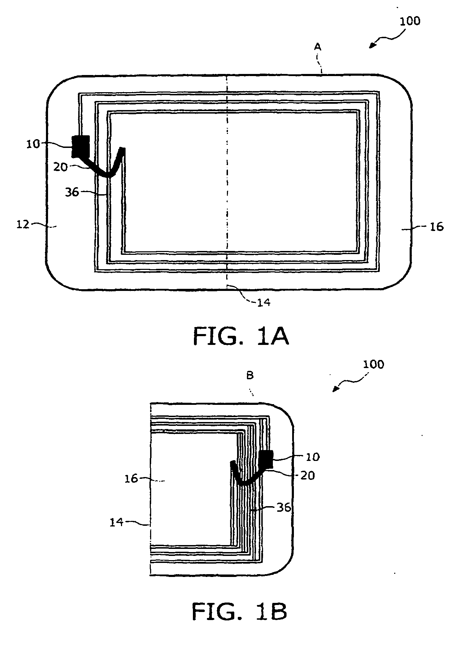

On se réfère à la figure 1. Dans cette figure, extraite du document WO 2005/045754 et pour laquelle on a conservé les références numériques d'origine par convenance, on a représenté un document sécurisé 100 représenté en position ouverte en figure 1A, et en position fermée en figure 1B. Comme on le voit, une antenne de grande taille est disposée à cheval sur une feuille du document, de part et d'autre d'un axe de symétrie 14 correspondant à l'axe de pliage du document pour l'amener en position fermée. Il est clair qu'en position ouverte du document, le flux électromagnétique envoyé par un lecteur distant et capté par l'antenne du document, va alimenter la puce 10 et permettre le fonctionnement de celle-ci. Alors qu'en position fermée du document, le courant induit dans l'antenne par les deux moitiés d'antenne s'annule. Il en résulte que la puce 10 n'est plus alimentée, et la communication avec un lecteur distant ne peut pas avoir lieu.

Ce fonctionnemet est avantageux, mais présente malgré tout quelques inconvénients. En effet, le document sécurisé tel que décrit nécessite la réalisation d'une connection électrique 20 sur le document lui-même, entre l'antenne du transpondeur, et les bornes de la puce. Il s'agit d'une opération délicate qui fait chuter les rendements de fabrication, ce qui est n'est pas indiqué par exemple dans le cas de la fabrication de passeports sécurisés.

En outre, comme l'antenne pliable est constituée par l'antenne du transpondeur, la structure de ce document n'est pas adéquate pour recevoir une seconde antenne ou antenne d'amplification susceptible d'améliorer la communication avec un lecteur distant.

De plus, une antenne de transpondeur pliable peut néanmoins générer un certain courant induit lorsque la puissance envoyée par le lecteur distant augmente, de sorte que cette structure ne présente pas une protection très efficace, dans certaines circonstances, contre la lecture intempestive des données de la puce.

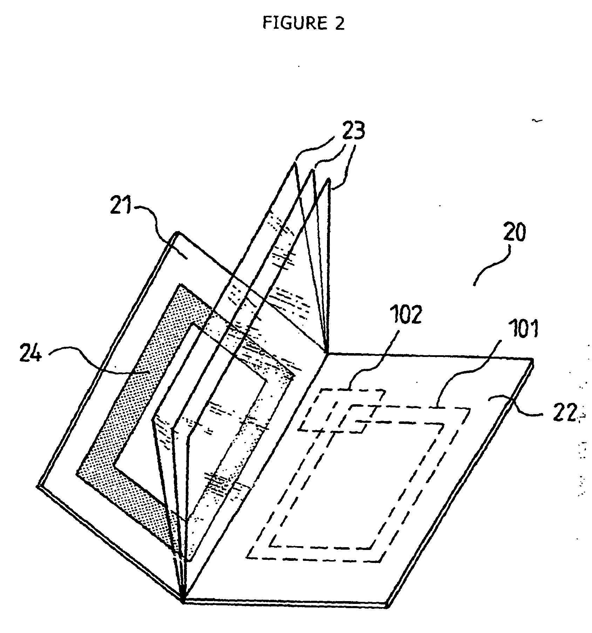

On se réfère à la figure 2. Dans cette figure, extraite du document WO 2005/ 066890 et pour laquelle on a conservé les références numériques d'origine par convenance, on a représenté un passeport électronique conforme à l'état de la technique qui propose déjà un masquage des données permettant au porteur du document de restaurer le geste volontaire pour autoriser la lecture des documents. Un livret 20 de type passeport comprend deux couvertures recto et verso (21, 22) et un ensemble de feuillets mobiles 23.

Le document sécurisé à puce sans contact comprend un transpondeur formé d'un module électronique 102 connecté à une antenne 101. L'antenne, classiquement en fil bobiné, est disposée sur une surface donnée d'une première partie du document, par exemple une des couvertures 22 du livret 20. Le transpondeur est destiné à communiquer grâce à un couplage électromagnétique à distance avec un lecteur, non représenté sur la figure 2. Le document sécurisé comprend en outre un élément de masquage passif 24 de l'antenne, supporté par la couverture 21 du livret, et apte à perturber le couplage entre le transpondeur et le lecteur pour rendre quasi-impossible la lecture du document dans une position fermée du document.

Ainsi dans l'exemple de la figure 2, l'élément de masquage est choisi pour rendre la lecture quasi-impossible lorsque le livret est refermé.

L'élément de masquage passif 24 est formé d'un matériau apte à perturber le couplage, par exemple un matériau métallique ou un matériau magnétique, de façon suffisante pour empêcher la lecture de la puce. En effet, la qualité et la quantité du transfert d'énergie entre le lecteur et le transpondeur dépendent des fréquences sur lesquelles sont accordés les circuits d'antenne du transpondeur et du lecteur, du coefficient de couplage, ainsi que des facteurs de qualité des circuits accordés du lecteur et du transpondeur. Ce document antérieur utilise le fait que toute perturbation d'origine électrique ou magnétique du circuit d'antenne du transpondeur est de nature à entraîner une perturbation du couplage.

Mais comme on le voit, le document sécurisé selon ce document antérieur nécessite un élément passif 24 de taille relativement grande pour protéger les données contre les lectures intempestives. En outre, cette réalisation n'est pas adaptée à des méthodes de fabrication de documents sécurisés dont le transpondeur est situé sur une pastille rapportée et qui comportent d'autre part une antenne d'amplification de plus grande taille. Par ailleurs, la simple présence de l'élément de masquage passif peut ne pas suffire à assurer la protection des données de la puce lorsque la puissance de lecture envoyée par le lecteur augmente.

On se réfère maintenant aux figures 3 et 4 correspondant à deux premières variantes de réalisation de l'invention, aptes à remédier aux inconvénients de l'état de la technique. Dans ces variantes, l'antenne du transpondeur est associée à une antenne d'amplification pliable située sur le document. Dans ce cas, le document 1 comporte donc en fait deux antennes, à savoir une première antenne ou antenne d'amplification 3, de relativement grande dimension, disposée à cheval sur une feuille pliable du document, et une seconde antenne 9 ou antenne de transpondeur, électriquement reliée à la puce 11 du module électronique qui comporte la mémoire hébergeant les données à protéger. Dans le cas notamment d'un passeport, le document 1 se présente sous la forme d'un livret dont les feuilles se composent d'une feuille de couverture 5 et de feuillets mobiles internes 7. L'ensemble des feuilles 5,7 est pliable autour d'un axe de pliage 8, de façon à délimiter pour chaque feuille deux parties (5a,5b), (7a,7b).

Les figures 3A et 3B correspondent au cas le plus simple de l'invention avec une antenne d'amplification 3 présentent une surface effective 13 représentée en traits hachurés, cette surface effective 13 étant de surface variable en fonction du degré d'ouverture du document.

Les figures 4A à 4B correspondent au cas où l'antenne d'amplification 3 comporte en outre un concentrateur de flux 15 sous la forme d'un bobinage supplémentaire disposé autour de la zone du transpondeur et de l'antenne 9 de celle-ci et qui permet de concentrer davantage le flux capté par l'antenne d'amplification 3, vers l'antenne 9 du transpondeur.

Le fonctionnement du document représenté en figures 3 et 4 est tel que lorsque le document est refermé comme en figure 3B ou 4B, la surface effective 13 de l'antenne d'amplification 3 qui correspond à sa surface de captation, décroit et tend vers zéro. Par conséquent, la résonnance entre les deux antennes 3, 9 ne peut pas se produire à la fréquence typique de travail (fréquence porteuse). Et en position fermée du document, l'antenne d'amplification 3 fonctionne en mode dégradé et joue par conséquent un role perturbateur du fait de sa désadaptation au milieu de propagation.

En outre, l'antenne 9 du transpondeur est configurée pour que dans des conditions normales de puissance de lecture, elle est incapable à elle seule d'embrasser un flux suffisant en provenance du lecteur pour alimenter la puce 11.

D'un point de vue électrique, le fonctionnement de la variante du document selon les figures 4A, 4B peut encore être expliqué à l'aide des schémas équivalents des figures 3C (passeport en position ouverte) et 4C (passeport en position fermée).

Le réglage de la fréquence d'accord, notée $F_A$, de l'antenne d'amplification 3 lorsque le passeport est en position ouverte, est tel que :

Pour le passeport ouvert (figure 4A) :

$$F_A \text{ ouvert} = 1/2 * \Pi * \sqrt{(Lprincipale + Lconcentrateur) * Ca},$$

où Ca est la capacité de l'antenne d'amplification, Lprincipale est l'inductance de l'antenne d'amplification 3, et Lconcent est l'inductance du concentrateur 15.

La capacité d'accord Ca est choisie de manière à optimiser l'adaptation du système couplé des deux antennes 3,9 au milieu de propagation.

Pour le passeport fermé (figure 4B) :

Lorsque l'antenne d'amplification 3 est pliée, sa surface équivalente est réduite, ce qui implique que moins de flux électromagnétique est capté. Le paramètre électrique d'inductance Lprincipale est fortement modifié et est remplacé par une inductance résiduelle notée Lres. Le circuit d'adaptation au milieu de propagation est par conséquent fortement modifié et l'adaptation au milieu de propagation ne se fait plus. Il en résulte la non fonctionnalité de la puce 11 en communication Radio sur la fréquence standard, et les données de la puce sont par conséquent protégées contre la lecture.

Pour le passeport fermé, on a donc :

$$F_A \text{ fermé} = 1/2 * \Pi * \sqrt{(Lres + Lconcentrateur) * Ca}$$

avec L res très différent de L principal. Le circuit ne remplit plus son rôle d'adaptation au milieu de propagation et empêche donc le fonctionnement de la puce par la voie RF originelle.

Le fonctionnement du dispositif des figures 3A et 4A sans concentateur 15 est similaire, mais sans le facteur Lconcentrateur dans les formules ci-dessus.

On se réfère maintenant aux figures 5A et 5B pour décrire le cas où l'antenne 9 de transpondeur est associée à une antenne d'amplification 3 pliable et en outre à un élément de blindage électromagnétique 17.

Afin d'améliorer encore la sécurité contre les lectures intempestives de données, une variante de l'invention prévoit de disposer sur une des feuilles du document, un élément de masquage électromagnétique 17.

Selon l'invention, celui-ci est de taille réduite, juste équivalente ou légèrement supérieure à la taille de l'antenne 9 du transpondeur. En outre, l'élément de masquage 17 est disposé sur l'une des feuilles du document de manière qu'en position fermée du document, l'élément de masquage 17 se superpose à la zone couverte par l'antenne 9 du transpondeur, de façon à annuler la possibilité de cette dernière de communiquer avec l'antenne d'amplification, ou avec une antenne de lecteur distant.

Bien entendu, l'élément de masquage 17 doit être disposé sur une page appropriée du document, de telle manière qu'en position ouverte du document, il ne soit pas en face de l'antenne 9 du transpondeur. Afin de limiter le coût de fabrication de l'élément de masquage 17, celui-ci peut être réalisé par aplat conducteur (par exemple par une sérigraphie argent) ou boucle de courant comme par exemple un motif conducteur sérigraphié formant un anneau métallique ou un anneau conducteur qui annule le champ magnétique, ou par l'une quelconque des techniques de réalisation de blindage magnétique décrites dans le document antérieur WO 2005/066890.

On se réfère maintenant aux figures 6A et 6B pour décrire une variante avantageuse du cas précédent avec élément de masquage. Dans cette variante, l'antenne d'amplification 3 est constituée d'un ensemble de spires qui sont essentiellement disposées sur une seule page du passeport, mais l'une des spires est prolongée sur une autre page du passeport de sorte que l'antenne reste pliable. La spire 19 qui se prolonge sur une page adjacente de la page portant les autres spires, possède une piste fortement élargie. La partie 21 fortement élargie de la spire 19 est disposée de telle manière qu'en position fermée du passeport, elle se trouve en face de l'antenne 9 du transpondeur, de façon à recouvrir la zone de l'antenne du transpondeur.

Comme représenté en figure 6B (zone hachurée), lorsque l'antenne d'amplification 3 est en outre pourvue d'un concentrateur de flux 15, la partie 21 élargie de la spire 19 est de préférence suffisamment grande pour également couvrir la zone du concentrateur de flux 15.

Ainsi, on recrée à l'aide de la piste 19 élargie de l'antenne d'amplification 3, un élément de masquage passif fonctionnellement équivalent à l'élément de masquage 17 décrit en relation avec le mode de réalisation des figures 5A, 5B, mais avec une facilité de fabrication plus élevée et un coût moindre, puisqu'il suffit de modifier l'une des spires de l'antenne d'amplification, sans avoir à rapporter de composant supplémentaire.

Il est à noter qu'en combinant les caractéristiques d'une antenne d'amplification 3, pourvue ou non d'un concentrateur de flux 15, et l'existence ou non d'un élément de masquage (17, 19) de l'antenne du transpondeur, et en jouant sur le positionnement respectif de l'antenne 9 de transpondeur, de l'antenne d'amplification 3, et de l'élément de masquage (17,19) éventuel, on obtient une grande richesse fonctionnelle susceptible de couvrir l'ensemble des situations dans lesquelles le document sécurisé 1 doit pouvoir communiquer avec un lecteur distant en position ouverte, et doit pouvoir annuler toute communication lorsque le document est fermé.

En ce qui concerne la réalisation du transpondeur et de son antenne 9, il est possible de les réaliser directement sur une feuille du document sécurisé comme connu en soi. Mais l'invention prévoit que de préférence, dans l'ensemble des variantes des figures 3 à 6, le transpondeur soit réalisé sur une pastille rapportée, conforme par exemple à celle décrite dans la demande FR 05 01378 de la même demanderesse.

Cette façon de procéder permet d'obtenir des rendements de fabrication plus élevés pour le document sécurisé terminé.

Mais ceci procure en outre l'avantage supplémentaire de pouvoir fabriquer séparément le document 1, pourvu de son antenne d'amplification pliable 3 et le cas échéant d'un élément de masquage (17, 19), et de ne reporter la pastille du transpondeur sur le document au dernier moment lors de la personalisation et de la livraison du document sécurisé à son utilisateur.

Alternativement, il est également possible de préparer le document avec la pastille du transpondeur, et de réaliser en une dernière étape de fabrication, l'intégration de l'antenne d'amplification à l'aide d'un film adhésif.

Mais il est également possible de préparer le document à l'exception du report de la pastille du transpondeur, et de réaliser en une dernière étape de fabrication, l'intégration de la pastille transpondeur, et le report d'un film adhésif portant l'antenne d'amplification.

En outre, en cas de rupture de l'antenne d'amplification, il suffit de remplacer cette antenne par une nouvelle antenne d'amplification par apposition d'un support autocollant portant une nouvelle antenne d'amplification, et il n'est plus nécessaire de remplacer l'intégralité du passeport. Cette caractéristique peut permettre à une autorité de supprimer temporairement la fonctionnalité radiofréquence en mode ouvert du passeport d'un ressortissant et de rétablir celle-ci ultérieurement sans changer le passeport.

Il est par ailleurs à noter qu'en pratique, d'autres variantes de réalisation de l'invention sont possibles au-delà de celles représentées dans les figures, sans sortir du cadre de l'invention, en variant les pages du document sur lesquels le transpondeur, l'antenne d'amplification, et l'élément de masquage éventuel sont disposés.

Parmi les exemples de réalisation non limitatifs couverts par l'invention, on peut alors citer les suivants :

1. le transpondeur est placé sur une première feuille d'un document à pliure. Sur cette même feuille et à cheval sur la pliure, est placée une antenne d'amplification 3. En position ouverte, le couplage entre antenne amplificatrice et transpondeur assure la fonctionnalité du document. En position fermée, les caractéristiques de l'antenne amplificatrice sont modifiées (surface équivalente, diagramme de rayonnement, caractéristiques électriques) et interdisent le bon fonctionnement du produit.

2. comme l'exemple précédent, mais l'antenne d'amplification 3 est placée sur une autre feuille que le transpondeur.

3. un système de perturbation ou de masquage est introduit. Cet élément de taille réduite, favorablement de taille intermédiaire entre la taille de l'antenne amplificatrice et l'antenne du transpondeur, et est placé sur le document pour perturber le couplage entre l'antenne amplificatrice 3 et l'antenne du transpondeur 9.

4. le transpondeur, l'antenne amplificatrice et l'élément de masqueur sont placés sur une feuille d'un document à pliure. Le transpondeur et l'élément de masquage sont disposés à l'intérieur de la zone couverte par l'antenne amplificatrice. L'antenne amplificatrice est placée à cheval sur la pliure. L'élément de masquage et le transpondeur sont placés de part et autre de la pliure de manière à ce qu'en position fermée du documet l'élément de masquage se superpose à l'antenne du transpondeur. En position ouverte du livret du document, l'élément de masquage ne perturbe pas le couplage entre antenne amplificatrice en mode opérationnel et le transpondeur. Le produit est alors apte à communiquer avec un lecteur extérieur.

5. en variante du cas précédent, le transpondeur est placé sur une autre feuille que l'antenne amplificatrice, et l'élement de masquage est encore placé sur une feuille différente.

6. Avantageusement, il est possible d'élaborer au sein de l'antenne amplificatrice un dispositif de concentration de flux favorisant le couplage entre cette dernière et le transpondeur. Ce dispositif dans le cas des antennes inductives peut être réalisé tel que dans le brevet n° EP 1,031,939. En position ouverte du document, le couplage entre antenne amplificatrice et transpondeur via le concentrateur assure alors la fonctionnalité du produit. En position fermée, les caractéristiques de l'antenne amplificatrice et du concentrateur sont modifiées (surface équivalente, diagramme de rayonnement, caractéristiques electriques) et interdisent le bon fonctionnement du produit par perturbation du flux direct entre transpondeur et lecteur extérieur.

L'homme du métier choisira le dimensionnement des composants pour assurer un fonctionnement conforme aux normes en vigueur, comme par exemple ISO 10536, ISO 11784, ISO 11785, ISO 14223, ISO14443, ISO 15693 et autres en UHF et VHF. En particulier, pour pouvoir lire les données du document lorsque le document est en position sensiblement ouverte, un champ d'activation supérieur à 1,5 Ampères/mètre (valeur minimale d'activation dans la norme ISO14443) permet de générer dans l'antenne du transpondeur du document un courant induit suffisant pour lire les données de la puce. A l'inverse, lorsque le passeport est fermé, les qualités électriques et géométriques interdisent la lecture de la puce avec des instruments classiques, même avec un champ bien supérieur à 7.5A/m (7.5A/m valeur maximale de champ rayonné par un lecteur du commerce conforme aux normes ISO14443 et associées).

Les solutions conformes à l'invention comportent plusieurs avantages par rapport à l'état de la technique. Ainsi le simple fait de fermer le document sécurisé a pour effet de replier l'antenne d'amplification sur elle même pour annuler toute capacité de communiquer du document par voie électromagnétique avec un lecteur distant.

Cette solution avec antenne d'amplification repliable et l'ensemble des variantes de réalisation décrites permettent par conséquent une fabrication simplifiée du document et un coût moindre par rapport aux solutions connues, avec un rendement de fabrication global plus élevé, tout en optimisant la résistance du document aux tentatives de lecture non autorisée des données de la puce du transpondeur.

## Revendications

1.  Document sécurisé (1) présentant la forme d'un livret composé d'au moins une feuille (5,7) repliable autour d'un axe de pliage (8), le document portant un transpondeur comportant une puce électronique (11) pourvue d'une mémoire pour le stockage de données et une antenne (9) de transpondeur, **caractérisé en ce qu'**il comporte en outre une antenne d'amplification (3) pliable, distincte de l'antenne (9) du transpondeur, et disposée sur le document de manière qu'en position ouverte de celui-ci, elle amplifie le flux électromagnétique capté par l'antenne (9) du transpondeur pour permettre la communication du document avec un lecteur distant, et qu'en position fermée du document, elle réduise le flux électromagnétique capté par l'antenne (9) du transpondeur en dessous d'un seuil minimal permettant la communication de la puce électronique (11) avec un lecteur distant.

2.  Document sécurisé (1) selon la revendication 1, **caractérisé en ce que** l'antenne d'amplification (3) pliable est disposée sur une feuille repliable (5,7) du livret, de part et d'autre de l'axe de pliage de celui-ci, de sorte que la fermeture du livret ramène la surface effective de ladite antenne d'amplification (3) pliable en dessous de la surface effective d'antenne nécessaire pour pouvoir communiquer avec l'antenne (9) du transpondeur.

3.  Document sécurisé (1) selon la revendication 2, **caractérisé en ce que** l'antenne d'amplification (3) est de taille supérieure à l'antenne (9) du transpondeur et **en ce qu'**elle est disposée à cheval sur une feuille (5,7) du document, de part et d'autre de l'axe de pliage (8) de celui-ci, de sorte qu'en position fermée du document, l'antenne d'amplification (3) inhibe la communication radiofréquence entre l'antenne (9) du transpondeur et l'antenne du lecteur.

4.  Document sécurisé (1) selon la revendication 3, dans lequel l'antenne d'amplification (3) du document et le transpondeur pourvu de son antenne (9) sont supportés par les feuillets internes (7a,7b) du livret.

5.  Document sécurisé (1) selon la revendication 3, **caractérisé en ce que** l'antenne d'amplification (3) du document et le transpondeur pourvu de son antenne (9) sont supportés respectivement par une feuille de couverture (5) du livret et un des feuillets internes (7a,7b) du livret.

**6.** Document sécurisé (1) selon la revendication 3, **caractérisé en ce que** l'antenne d'amplification (3) du document et le transpondeur pourvu de son antenne (9) sont supportés respectivement par un des feuillets internes (7a,7b) du livret et par une des feuilles de couverture (5) du livret.

**7.** Document sécurisé (1) selon l'une des revendications précédentes, **caractérisé en ce que** l'antenne d'amplification (3) comporte, en plus des spires assurant l'amplification du flux capté par l'antenne (9) du transpondeur, au moins un concentrateur de flux (15) permettant de concentrer le flux capté issu du lecteur, vers l'antenne (9) du transpondeur.

**8.** Document sécurisé (1) selon la revendication 7, **caractérisé en ce qu'**il comporte en outre un élément de masquage (17) du flux électromagnétique, disposé sur l'une des feuilles (5,7) du document de telle manière qu'en position fermée du document, il se superpose à l'antenne (9) du transpondeur pour empêcher la communication entre le transpondeur et le lecteur distant.

**9.** Document sécurisé (1) selon la revendication 8, **caractérisé en ce que** l'élément de masquage (17) est réalisé sous la forme d'une piste élargie (21) d'une spire (19) de l'antenne d'amplification (3).

**10.** Document sécurisé (1) selon la revendication 9, **caractérisé en ce que** le transpondeur pourvu de son antenne (9) sont disposés sur une pastille rapportée et solidarisée avec l'une des feuilles du document.

**Claims**

**1.** A secured document (1) in the form of a booklet of at least one sheet (5, 7) which can be folded about a folding axis (8), the document having a transponder with an electronic chip (11) provided with a memory for storing the data and a transponder antenna (9), **characterised in that** it further comprises a foldable amplifier antenna (3), distinct from the transponder antenna (9) and arranged on the document such that when the same is open, said antenna amplifies the electromagnetic flux received by the transponder antenna (9) to permit communication of the document with a remote reader and, in the closed position of the document, said antenna reduces the electromagnetic flux received by the transponder antenna (9) beneath a minimum threshold permitting communication of the electronic chip (11) with a remote reader.

**2.** A secured document (1) according to claim 1, **characterised in that** the foldable amplifier antenna (3) is positioned on a foldable sheet (5, 7) of the booklet, on either side of the folding axis thereof, so that the closing of the booklet brings the effective area of said foldable amplifier antenna (3) beneath the effective surface of the antenna required to be able to communicate with the transponder antenna (9).

**3.** A secured document (1) according to claim 2, **characterised in that** the amplifier antenna (3) has dimensions above those of the transponder antenna (9) and **in that** it is saddle-positioned on a sheet (5, 7) of the document, on either side of the folding axis (8) thereof, such that in the closed position of the document, the amplifier antenna (3) inhibits the radio frequency communication between the transponder antenna (9) and the reader antenna.

**4.** A secured document (1) according to claim 3, wherein the amplifier antenna (3) of the document and the transponder provided with an antenna (9) are supported by the sheets (7a, 7b) inside the booklet.

**5.** A secured document (1) according to claim 3, **characterised in that** the amplifier antenna (3) of the document and the transponder provided with an antenna (9) are respectively supported by a cover sheet (5) of the booklet and one of the sheets (7a, 7b) inside the booklet.

**6.** A secured document (1) according to claim 3, **characterised in that** the amplifier antenna (3) of the document and the transponder provided with an antenna (9) are respectively supported by one of the sheets (7a, 7b) inside the booklet and by one of the cover sheets (5) of the booklet.

**7.** A secured document (1) according to one of the preceding claims, **characterised in that** the amplifier antenna (3) includes in addition to the windings providing the amplification of the flux received by the transponder antenna (9), at least one flux concentrator (15) making it possible to concentrate the flux received from the reader to the transponder antenna (9).

8. A secured document (1) according to claim 7, **characterised in that** it further includes an element for protecting (17) the electromagnetic flux positioned on one of the sheets (5, 7) of the document, such that in the closed position of the document, it is superimposed with the transponder antenna (9) to inhibit the communication between the transponder and the remote reader.

9. A secured document (1) according to claim 8, **characterised in that** the protection element (17) is in the form of a widened track (21) of a winding (19) of the amplifier antenna (3).

10. A secured document (1) according to claim 9, **characterised in that** the transponder provided with an antenna (9) is positioned on a pad added on and integral with one of the sheets of the document.


**Patentansprüche**

1. Geschütztes Dokument (1), das die Form eines Hefts aufweist, das aus mindestens einem um eine Faltachse (8) zusammenfaltbaren Blatt (5, 7) besteht, wobei das Dokument einen Transponder mit einem elektronischen Chip (11), der mit einem Speicher für die Speicherung von Daten versehen ist, und mit einer Transponderantenne (9) trägt, **dadurch gekennzeichnet, dass** es außerdem eine faltbare Verstärkungsantenne (3) umfasst, die von der Antenne (9) des Transponders verschieden ist und auf dem Dokument so angeordnet ist, dass sie in dessen offener Position den elektromagnetischen Fluss, der von der Antenne (9) des Transponders erfasst wird, verstärkt, um die Kommunikation des Dokuments mit einem entfernten Leser zu ermöglichen, und in der geschlossenen Position des Dokuments den von der Antenne (9) des Transponder erfassten elektromagnetischen Fluss unter einen minimalen Schwellenwert, der die Kommunikation des elektronischen Chips (11) mit einem entfernten Leser ermöglicht, verringert.

2. Geschütztes Dokument (1) nach Anspruch 1, **dadurch gekennzeichnet, dass** die faltbare Verstärkungsantenne (3) auf einem zusammenfaltbaren Blatt (5, 7) des Hefts auf beiden Seiten der Faltachse von diesem angeordnet ist, so dass das Schießen des Hefts die wirksame Oberfläche der faltbaren Verstärkungsantenne (3) unter die wirksame Antennenoberfläche bringt, die erforderlich ist, um mit der Antenne (9) des Transponders kommunizieren zu können.

3. Geschütztes Dokument (1) nach Anspruch 2, **dadurch gekennzeichnet, dass** die Verstärkungsantenne (3) eine größere Größe als die Antenne (9) des Transponders aufweist und dass sie rittlings auf einem Blatt (5, 7) des Dokuments auf beiden Seiten der Faltachse (8) von diesem angeordnet ist, so dass in der geschlossenen Position des Dokuments die Verstärkungsantenne (3) die Hochfrequenzkommunikation zwischen der Antenne (9) des Transponders und der Antenne des Lesers hemmt.

4. Geschütztes Dokument (1) nach Anspruch 3, wobei die Verstärkungsantenne (3) des Dokuments und der Transponder, der mit seiner Antenne (9) versehen ist, durch die inneren Blätter (7a, 7b) des Hefts getragen sind.

5. Geschütztes Dokument (1) nach Anspruch 3, **dadurch gekennzeichnet, dass** die Verstärkungsantenne (3) des Dokuments und der Transponder, der mit seiner Antenne (9) versehen ist, durch ein Deckblatt (5) des Hefts bzw. eines der inneren Blätter (7a, 7b) des Hefts getragen sind.

6. Geschütztes Dokument (1) nach Anspruch 3, **dadurch gekennzeichnet, dass** die Verstärkungsantennc (3) des Dokuments und der Transponder, der mit seiner Antenne (9) versehen ist, durch eines der inneren Blätter (7a, 7b) des Hefts bzw. durch eines der Deckblätter (5) des Hefts getragen sind.

7. Geschütztes Dokument (1) nach einem der vorangehenden Ansprüche, **dadurch gekennzeichnet, dass** die Verstärkungsantenne (3) zusätzlich zu den Windungen, die die Verstärkung des von der Antenne (9) des Transponders erfassten Flusses sicherstellen, mindestens einen Flusskonzentrator (15) umfasst, der es ermöglicht, den erfassten Fluss, der vom Leser stammt, auf die Antenne (9) des Transponders zu konzentrieren.

8. Geschütztes Dokument (1) nach Anspruch 7, **dadurch gekennzeichnet, dass** es außerdem ein Element (17) zum Abschirmen des elektromagnetischen Flusses umfasst, das auf einem der Blätter (5, 7) des Dokuments derart angeordnet ist, dass in der geschlossenen Position des Dokuments es sich mit der Antenne (9) des Transponders überlagert, um die Kommunikation zwischen dem Transponder und dem entfernten Leser zu verhindern.

9. Geschütztes Dokument (1) nach Anspruch 8, **dadurch gekennzeichnet, dass** das Abschirmungselement (17) in Form einer verbreiterten Leiterbahn (21) einer Windung (19) der Verstärkungsantenne (3) ausgeführt ist.

10. Geschütztes Dokument (1) nach Anspruch 9, **dadurch gekennzeichnet, dass** der Transponder, der mit seiner Antenne (9) versehen ist, auf einem Plättchen angeordnet ist, das auf eines der Blätter des Dokuments aufgebracht und damit fest verbunden ist.

FIG. 1A

FIG. 1B

FIGURE 2

**FIG. 3A**

**FIG. 3B**

**FIG. 3C**

Lprinc  Lconcent

capacité
d'accord

Puce

**FIG. 4A**

**FIG. 4B**

**FIG. 4C**

Lres   Lconcent

Puce

Capacité d accord

**FIG. 5A**

**FIG. 5B**

**FIG. 6A**

**FIG. 6B**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2005066890 A
- FR 0501378
- WO 2005045754 A
- FR 2888367 A
- FR 2888653 A
- EP 1031939 A